# EUROPEAN PATENT SPECIFICATION

(11) **EP 3 076 515 B1**
(45) Date of publication and mention of the grant of the patent: **20.05.2020**
(21) Application number: 15161856.8
(22) Date of filing: 31.03.2015
(51) Int. Cl.: H02J 3/18

(54) **AN ELECTRICAL ENERGY SUPPLY SYSTEM**
STROMVERSORGUNGSSYSTEM
SYSTÈME D'ALIMENTATION EN ÉNERGIE ÉLECTRIQUE

(43) Date of publication of application: 05.10.2016
(73) Proprietor: Vacon Oy, 65380 Vaasa (FI)
(72) Inventor: Kopka, Martin, 58730 Fröndenberg (DE); Strandberg, Stefan, 66600 Vörå (FI); Ollila, Jaakko, 33960 Pirkkala (FI)
(74) Representative: Berggren Oy, Helsinki & Oulu

(56) References cited:
- WO-A2-2011/018527
- CN-A- 101 753 089
- CN-A- 101 847 877
- CN-A- 102 005 935
- CN-Y- 2 268 340

## Description

### Field of the disclosure

The disclosure relates to a method for starting an asynchronous generator of an electrical energy supply system. Furthermore, the disclosure relates to an electrical energy supply system that comprises one or more asynchronous generators.

### Background

In many cases, an electrical energy supply system comprises one or more asynchronous generators because asynchronous generators have a simple mechanical structure and thereby the asynchronous generators are cost effective and easy to maintain. Furthermore, asynchronous generators are straightforward to operate as there is no need to take care of synchronism between each generator and another electrical system in contrast to when using synchronous generators. The above-mentioned other electrical system may comprise for example an inverter unit for transferring electrical power, i.e. active power, from an asynchronous generator to a direct voltage circuit and for supplying reactive power to the asynchronous generator. The electrical energy supply system can be, for example but not necessarily, a part of an electrical system of a ship.

An inherent inconvenience related to asynchronous generators is that an asynchronous generator is not capable of generating voltages when being rotated so that there are no currents in its stator winding. Therefore, an asynchronous generator cannot be started in the same way as a synchronous generator is typically started so that the synchronous generator is first rotated when being disconnected from the other electrical system and the amplitude, frequency, and phase of the voltages of the synchronous generator are adjusted to be sufficiently close to those of the voltages of the other electrical system, and thereafter the synchronous generator is connected to the other electrical system.

A known approach to start an asynchronous generator that is connected to an inverter unit is to use the inverter unit for exciting the asynchronous generator during starting. This requires, however, that there is a power supply for energizing the inverter unit to be capable of supplying voltages to the asynchronous generator and that the inverter unit is provided with or connected to a control arrangement for controlling the inverter unit to excite the asynchronous generator during the starting. In practice, there is typically a need for a power supply for charging a direct voltage intermediate circuit connected to an inverter unit. A technical solution of the kind described above is presented e.g. in publication EP2090508.

Publication WO2011018527 describes a double fed induction generator "DFIG" system. The system comprises a slip-ring induction generator and a converter for carrying out a controlled conversion between direct voltage and alternating voltage induced on the rotor winding of the slip-ring induction generator. An inherent challenge related to this system is the maintenance needed by the slip-ring brushes for conducting current between the rotor winding and the above-mentioned converter.

CN 2268340Y discloses another generator system with delayed starting.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the present invention, there is provided a new electrical energy supply system that can be, for example but not necessarily, a part of an electrical system of a ship. An electrical energy supply system according to the invention is given in claim 1.

As the excitation of the asynchronous generator during the starting is carried out with the aid of the capacitors, it is not necessary to have a power supply for energizing the converter system to be capable of supplying voltages to the asynchronous generator and furthermore there is no need for a control arrangement for controlling the converter system to excite the asynchronous generator during the starting. In many cases, the voltages of the capacitors can be zeroes at the beginning of the starting because the operation of the asynchronous generator can start with the aid of the remanent magnetization of the asynchronous generator. It is, however, also possible to arrange non-zero initial voltages to the capacitors.

In accordance with the present invention, there is provided also a new method for starting an asynchronous generator of an electrical energy supply system that further comprises, in addition to the asynchronous generator, a converter system connected to the electrical terminals of the stator winding of the asynchronous generator and suitable for converting the voltages of the asynchronous generator into one or more voltages suitable for an external system to be supplied by the electrical energy supply system. A method according to the invention is given in claim 7.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. The features recited in the accompanied dependent claims are mutually freely combinable unless otherwise explicitly stated. Furthermore, it is to be understood that the use of "a" or "an", i.e. a singular form, throughout this document does not exclude a plurality.

### Brief description of figures

Exemplifying and non-limiting embodiments of the invention and their advantages are explained in greater detail below in the sense of examples and with reference to the accompanying drawings, in which:
figure 1 illustrates an electrical energy supply system according to an exemplifying and non-limiting embodiment of the invention, and
figure 2 shows a flowchart of a method according to an exemplifying and non-limiting embodiment of the invention for starting an asynchronous generator of an electrical energy supply system.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

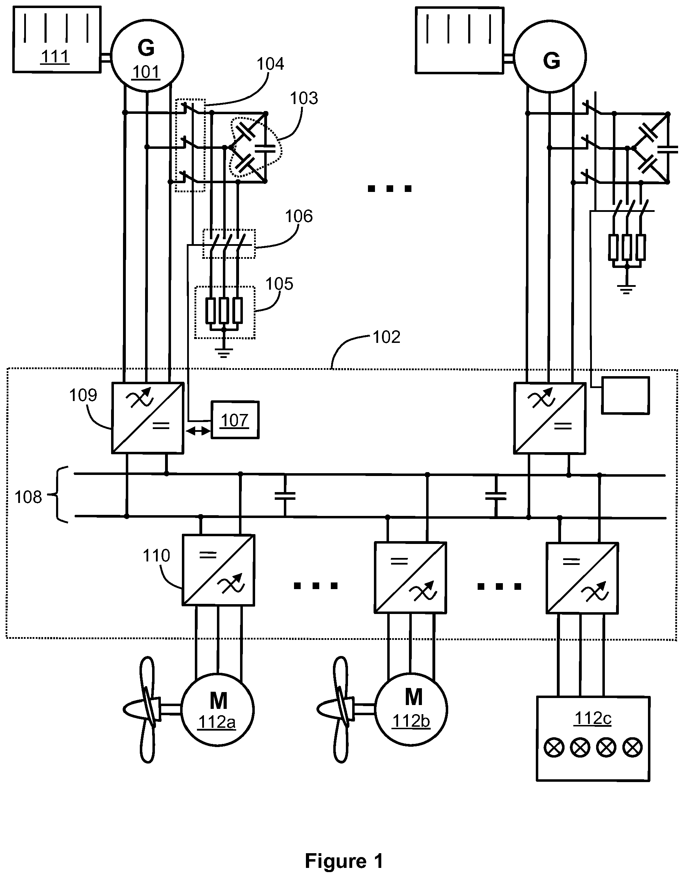

Figure 1 illustrates an electrical energy supply system according to an exemplifying and non-limiting embodiment of the invention. The electrical energy supply system comprises asynchronous generators one of which is denoted with a reference number 101 in figure 1. In this exemplifying case, the stator of each asynchronous generator comprises a three-phase winding but it is also possible to use a stator winding where the number of phases is different from three. The rotor of each of the asynchronous generators comprises advantageously a squirrel-cage winding. In principle, it is also possible to use slip-ring asynchronous generators but asynchronous generators having a squirrel-cage rotor winding are typically more cost effective, easier to operate, and more maintenance free. Furthermore, especially in high speed applications, it is possible to use asynchronous generators having a solid rotor without a squirrel-cage winding so as to provide high mechanical strength, but on typical speed ranges asynchronous generators having a squirrel-cage rotor winding have a better efficiency. The asynchronous generators are driven by prime movers each of which can be for example a combustion engine, e.g. a diesel engine, or a gas turbine. It is also possible that each prime mover is for example a wind turbine, water turbine, or some other device for supplying mechanical power to one of the asynchronous generators. In generator operation, the prime mover drives the rotor of the asynchronous generator above the synchronous speed, i.e. the slip is negative. In figure 1, the prime mover for driving the asynchronous generator 101 is denoted with a reference number 111.

The electrical energy supply system comprises a converter system 102 connected to the electrical terminals of each asynchronous generator and configured to convert the voltages of the asynchronous generators into one or more voltages suitable for an external system that is supplied by the electrical energy supply system. In the exemplifying and non-limiting case illustrated in figure 1, the external system comprises motors 112a and 112b for driving mechanical loads and a lighting system 112c.

Without limiting the generality, we can consider the asynchronous generator 101 as there are similar arrangements in conjunction with all the asynchronous generators illustrated in figure 1. The electrical energy supply system comprises capacitors 103 that are connected to the electrical terminals of the asynchronous generator 101 at least during starting of the asynchronous generator 101. The capacitors 103 are suitable for exciting the asynchronous generator 101 during the starting. In the exemplifying and non-limiting case illustrated in figure 1, the capacitors are delta-connected but also star-connected capacitors could be used. The amplitude of the voltages of the asynchronous generator 101 during the starting is determined substantially by the capacitances of the capacitors 103 and by the saturation curve of the magnetizing inductance of the asynchronous generator 101.

In the exemplifying and non-limiting case illustrated in figure 1, the electrical energy supply system comprises first switches 104 for disconnecting the capacitors 103 from the electrical terminals of the asynchronous generator 101 after the starting. Furthermore, the electrical energy supply system comprises discharging resistors 105 and second switches 106 for connecting the discharging resistors 105 to the capacitors 103. In this exemplifying case, the discharging resistors 105 are star-connected resistors having a grounded star-point. The first and second switches 104 and 106 are operated with a control system 107. The control system 107 can be configured to operate the first and second switches for example so that the second switches 106 connect the discharging resistors 105 to the capacitors 103 when the first switches 104 disconnect the capacitors 103 from the electrical terminals of the asynchronous generator 101 and that the second switches 106 disconnect the discharging resistors 105 from the capacitors 103 when the first switches 104 connect the capacitors to the electrical terminals of the asynchronous generator 101. In the exemplifying situation shown in figure 1, the capacitors are disconnected from the electrical terminals of the asynchronous generator and the discharging resistors are connected to the capacitors.

In the exemplifying and non-limiting case illustrated in figure 1, the converter system 102 comprises a direct voltage circuit 108, first inverter stages for transferring electrical power from the asynchronous generators to the direct voltage circuit, and second inverter stages for converting the direct voltage of the direct voltage circuit 108 into alternating voltages suitable for the external system supplied by the electrical energy supply system. In figure 1, one of the second inverter stages is denoted with a reference number 110 and the particular one of the first inverter stages which is configured to transfer electrical power from the asynchronous generator 101 to the direct voltage circuit 108 is denoted with a reference number 109.

The above-mentioned control system 107 is advantageously integrated in the above-mentioned inverter stage 109. In other words, the inverter stage 109 may comprise a controller for operating, in addition to possible other tasks of the controller, the first and second switches 104 and 106. It is, however, also possible that the control system 107 is a separate device or devices.

In an exemplifying and non-limiting case, the inverter stage 109 comprises separate diodes in parallel with its power switches and/or parasitic diodes in its power switches and these diodes constitute a rectifier bridge for charging the direct voltage circuit 108 when the asynchronous generator 101 is excited by the capacitors 103. The inverter stage 109 is advantageously configured to operate so that there is a temporal gap between a time instant when the capacitors 103 are disconnected from the asynchronous generator 101 and a time instant when the power switches of the inverter stage 109 are started to be controlled so that the inverter stage 109 determines the voltage of the asynchronous generator 101.

It is worth noting that electrical energy supply systems according to different embodiments of the invention may have various kinds of converter systems. For example, a converter system may comprise only one or more inverter stages for transferring electrical power from one or more asynchronous generators to one or more direct voltage circuits. In this example case, the external system is supplied with one or more direct voltages. For another example, a converter system may comprise one or more direct AC-to-AC converters, where "AC" means alternative current or alternative voltage depending on the context.

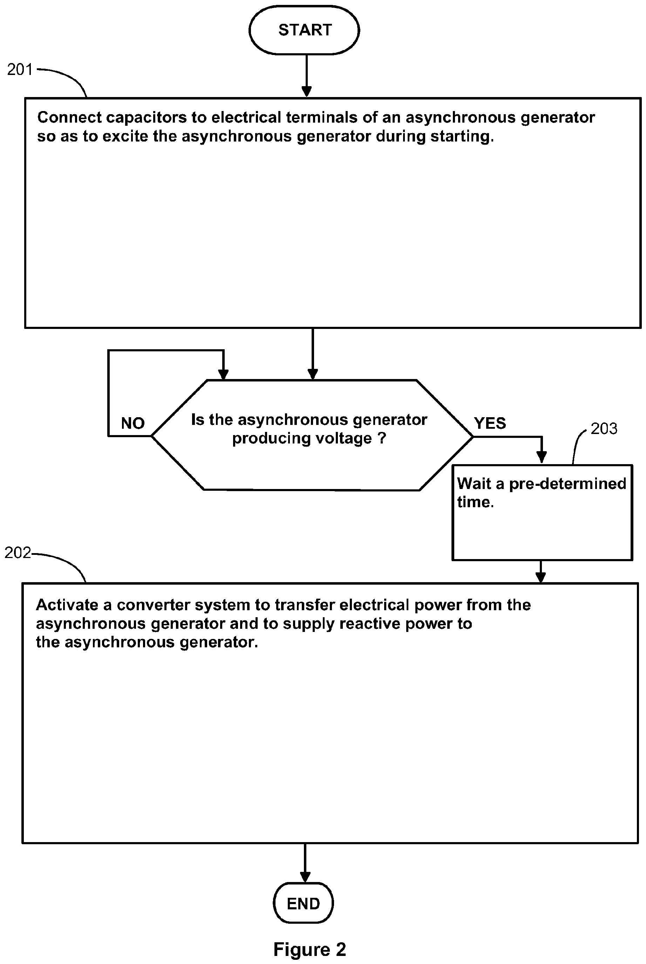

Figure 2 shows a flowchart of a method according to an exemplifying and non-limiting embodiment of the invention for starting an asynchronous generator of an electrical energy supply system. In addition to the asynchronous generator, the electrical energy supply system further comprises a converter system connected to the electrical terminals of the asynchronous generator and suitable for converting the voltages of the asynchronous generator into one or more voltages suitable for an external system to be supplied by the electrical energy supply system. The method comprises the following actions:
- action 201: connecting capacitors to the electrical terminals of the asynchronous generator so as to excite the asynchronous generator during starting of the asynchronous generator, and subsequently
- action 202: activating the converter system to transfer electrical power from the asynchronous generator and to supply reactive power to the asynchronous generator.

A method according to an exemplifying and non-limiting embodiment of the invention further comprises:
- disconnecting the capacitors from the electrical terminals of the asynchronous generator after the asynchronous generator excited by the capacitors has energized the converter system to be ready to operate, and
- waiting, action 203, a pre-determined time after the disconnecting the capacitors and prior to the activating the converter system to transfer the electrical power from the asynchronous generator and to supply the reactive power to the asynchronous generator.

In order to be sure that the capacitors are properly disconnected prior to the converter system is activated the above-mentioned pre-determined time is advantageously at least as long as the opening delay of the switches that disconnect the capacitors. A method according to an exemplifying and non-limiting embodiment of the invention further comprises connecting discharging resistors to the capacitors after the capacitors have been disconnected from the electrical terminals of the asynchronous generator.

In a method according to an exemplifying and non-limiting embodiment of the invention, the voltages of the capacitors are zeroes at the beginning of the starting and the operation of the asynchronous generator starts with the aid of the remanent magnetization of the asynchronous generator.

The specific examples provided in the description given above should not be construed as limiting the scope and/or the applicability of the accompanied claims. Lists and groups of examples provided in the description given above are not exhaustive unless otherwise explicitly stated.

## Claims

1. An electrical energy supply system comprising:
- at least one asynchronous generator (101), and
- a converter system (102) connected to electrical terminals of each stator winding of one of the at least one asynchronous generator,
**characterized in that** the electrical energy supply system further comprises capacitors (103) connected to said electrical terminals of said each stator winding of the one asynchronous generator between the converter system (102) and the asynchronous generator (101) at least during starting of the asynchronous generator and suitable for exciting the asynchronous generator during the starting,
wherein the converter system comprises a direct voltage circuit (108) and a first inverter stage (109) for transferring electrical power from the asynchronous generator to the direct voltage circuit, and at least one second inverter stage (110) for converting direct voltage of the direct voltage circuit into one or more alternating voltages suitable for the external system to be supplied by the electrical energy supply system,
wherein the electrical energy supply system comprises first switches (104) for disconnecting the capacitors from the electrical terminals of the stator winding of the asynchronous generator after the starting, and a control system (107) configured to:
- control the first switches to disconnect the capacitors from the electrical terminals of the stator winding of the asynchronous generator after the asynchronous generator excited by the capacitors has energized the converter system to be ready to operate, and
- wait a pre-determined time after the disconnecting the capacitors and prior to activating the converter system to transfer electrical power from the asynchronous generator and to supply reactive power to the asynchronous generator.

2. An electrical energy supply system according to claim 1, wherein the electrical energy supply system comprises discharging resistors (105) and second switches (106) for connecting the discharging resistors to the capacitors.

3. An electrical energy supply system according to claim 2, wherein the electrical energy supply system comprises a control system (107) for operating the first and second switches so that the second switches connect the discharging resistors to the capacitors when the first switches disconnect the capacitors from the electrical terminals of the stator winding of the asynchronous generator.

4. An electrical energy supply system according to any of claims 2-3, wherein the discharging resistors (105) are star-connected resistors having a grounded star-point.

5. An electrical energy supply system according to any of claims 1-4, wherein a rotor of the asynchronous generator comprises a squirrel-cage winding.

6. An electrical energy supply system according to any of claims 1-5, wherein the stator winding of the asynchronous generator is a three-phase winding.

7. A method for starting an asynchronous generator of an electrical energy supply system that further comprises:
- a converter system connected to electrical terminals of each stator winding of the asynchronous generator and comprising a direct voltage circuit (108) and a first inverter stage (109) for transferring electrical power from the asynchronous generator to the direct voltage circuit, and at least one second inverter stage (110) for converting direct voltage of the direct voltage circuit into one or more alternating voltages suitable for the external system to be supplied by the electrical energy supply system,
**characterized in that** the method comprises:
- connecting (201) capacitors to the electrical terminals of said each stator winding of the asynchronous generator between the converter system and the asynchronous generator so as to excite the asynchronous generator during starting, and subsequently
- disconnecting the capacitors from the electrical terminals of the stator winding of the asynchronous generator after the asynchronous generator excited by the capacitors has energized the converter system to be ready to operate, and
- waiting (203) a pre-determined time after the disconnecting the capacitors prior to
- activating (202) the converter system to transfer electrical power from the asynchronous generator and to supply reactive power to the asynchronous generator.

8. A method according to claim 7, wherein the method further comprises connecting discharging resistors to the capacitors after the capacitors have been disconnected from the electrical terminals of the stator winding of the asynchronous generator.

9. A method according to any of claims 7-8, wherein voltages of the capacitors are zeroes at a beginning of the starting, and operation of the asynchronous generator starts with the aid of remanent magnetization of the asynchronous generator.

## Patentansprüche

1. System zur Versorgung elektrischer Energie, umfassend:
- mindestens einen Asynchrongenerator (101), und
- ein Wandler System (102), das mit elektrischen Anschlüssen jeder Statorwicklung eines von dem mindestens einem Asynchrongenerator verbunden ist,
**dadurch gekennzeichnet, dass** das System zur Versorgung elektrischer Energie ferner Kondensatoren (103) umfasst, die mit den elektrischen Anschlüssen jeder Statorwicklung des einen Asynchrongenerators zwischen dem Wandlersystem (102) und dem Asynchrongenerator (101) zumindest beim Starten des Asynchrongenerators verbunden sind und zum Erregen des Asynchrongenerators beim Starten geeignet sind,
wobei das Wandlersystem eine Gleichspannungsschaltung (108) und eine erste Wechselrichterstufe (109) zum Übertragen elektrischer Leistung vom Asynchrongenerator zur Gleichspannungsschaltung, und mindestens eine zweite Wechselrichterstufe (110) zum Wandeln von Gleichspannung der Gleichspannungsschaltung in eine oder mehrere Wechselspannungen, die für das externe System, das durch das System zur Versorgung elektrischer Energie beliefert wird, geeignet sind, umfasst,
wobei das System zur Versorgung elektrischer Energie erste Schalter (104) zum Trennen der Kondensatoren von den elektrischen Anschlüssen der Statorwicklung des Asynchrongenerators nach dem Starten, und ein Steuersystem (107) umfasst, das zum Folgenden ausgelegt ist:
- Steuern der ersten Schalter zum Trennen der Kondensatoren von den elektrischen Anschlüssen der Statorwicklung des Asynchrongenerators, nachdem der durch die Kondensatoren erregte Asynchrongenerator das Wandlersystem versorgt hat, so dass es betriebsbereit ist, und
- Abwarten einer vorgegebenen Zeitdauer nach dem Trennen der Kondensatoren und vor einem Aktivieren des Wandlersystems zum Übertragen elektrischer Leistung vom Asynchrongenerator und zum Liefern von Blindleistung an den Asynchrongenerator.

2. System zur Versorgung elektrischer Energie nach Anspruch 1, wobei das System zur Versorgung elektrischer Energie Entladewiderstände (105) und zweite Schalter (106) zum Verbinden der Entladewiderstände mit den Kondensatoren umfasst.

3. System zur Versorgung elektrischer Energie nach Anspruch 2, wobei das System zur Versorgung elektrischer Energie ein Steuersystem (107) zum Betreiben der ersten und der zweiten Schalter umfasst, so dass die zweiten Schalten die Entladewiderstände mit den Kondensatoren verbinden, wenn die ersten Schalter die Kondensatoren von den elektrischen Anschlüssen der Statorwicklung des Asynchrongenerators trennen.

4. System zur Versorgung elektrischer Energie nach einem der Ansprüche 2 bis 3, wobei die Entladewiderstände (105) sterngeschaltete Widerstände sind, die einen geerdeten Sternpunkt aufweisen.

5. System zur Versorgung elektrischer Energie nach einem der Ansprüche 1 bis 4, wobei ein Rotor des Asynchrongenerators eine Kurzschlusswicklung umfasst.

6. System zur Versorgung elektrischer Energie nach einem der Ansprüche 1 bis 5, wobei die Statorwicklung des Asynchrongenerators eine Dreiphasenwicklung ist.

7. Verfahren zum Starten eines Asynchrongenerators eines Systems zur Versorgung elektrischer Energie, das ferner umfasst:
- ein Wandlersystem, das mit elektrischen Anschlüssen jeder Statorwicklung des Asynchrongenerators verbunden ist und eine Gleichspannungsschaltung (108) und eine erste Wechselrichterstufe (109) zum Übertragen elektrischer Leistung vom Asynchrongenerator zur Gleichspannungsschaltung, und mindestens eine zweite Wechselrichterstufe (110) zum Wandeln von Gleichspannung der Gleichspannungsschaltung in eine oder mehrere Wechselspannungen, die für das externe System, das durch das System zur Versorgung elektrischer Energie beliefert wird, geeignet sind, umfasst,
**dadurch gekennzeichnet, dass** das Verfahren umfasst:
- Verbinden (201) von Kondensatoren mit den elektrischen Anschlüssen jeder Statorwicklung des Asynchrongenerators zwischen dem Wandlersystem und dem Asynchrongenerator, um den Asynchrongenerator beim Starten zu erregen, und anschließend
- Trennen der Kondensatoren von den elektrischen Anschlüssen der Statorwicklung des Asynchrongenerators, nachdem der durch die Kondensatoren erregte Asynchrongenerator das Wandlersystem versorgt hat, so dass es betriebsbereit ist, und
- Abwarten (203) einer vorgegebenen Zeitdauer nach dem Trennen der Kondensatoren vor einem
- Aktivieren (202) des Wandlersystems zum Übertragen elektrischer Leistung vom Asynchrongenerator und zum Liefern von Blindleistung an den Asynchrongenerator.

8. Verfahren nach Anspruch 7, wobei das Verfahren ferner ein Verbinden von Entladewiderständen mit den Kondensatoren umfasst, nachdem die Kondensatoren von den elektrischen Anschlüssen der Statorwicklung des Asynchrongenerators getrennt wurden.

9. Verfahren nach einem der Ansprüche 7 bis 8, wobei Spannungen der Kondensatoren zu Beginn des Starts null betragen und ein Betrieb des Asynchrongenerators mithilfe von remanenter Magnetisierung des Asynchrongenerators startet.

## Revendications

1. Système d'alimentation en énergie électrique comprenant:
- au moins un générateur asynchrone (101), et
- un système convertisseur (102) connecté aux bornes électriques de chaque enroulement statorique d'un des au moins un générateur asynchrone,
**caractérisé en ce que** le système d'alimentation en énergie électrique comprend en outre des condensateurs (103) connectés auxdites bornes électriques dudit enroulement de chaque stator du générateur asynchrone entre le système convertisseur (102) et le générateur asynchrone (101) au moins pendant le démarrage du générateur asynchrone et adaptés pour exciter le générateur asynchrone lors du démarrage,
dans lequel le système de convertisseur comprend un circuit de tension continue (108) et un premier étage inverseur (109) pour transférer la puissance électrique du générateur asynchrone au circuit de tension continue, et au moins un deuxième étage inverseur (110) pour convertir la tension continue du circuit de tension continue en une ou plusieurs alternances de tension adaptées au système externe à alimenter par le système d'alimentation en énergie électrique,
dans lequel le système d'alimentation en énergie électrique comprend des premiers commutateurs (104) pour déconnecter les condensateurs des bornes électriques de l'enroulement statorique du générateur asynchrone après le démarrage, et un système de commande (107) configuré pour:
- commander les premiers interrupteurs pour déconnecter les condensateurs des bornes électriques de l'enroulement statorique du générateur asynchrone après que le générateur asynchrone excité par les condensateurs a alimenté le système convertisseur pour qu'il soit prêt à fonctionner, et
- attendre un temps prédéterminé après la déconnexion des condensateurs et avant d'activer le système de conversion pour transférer la puissance électrique du générateur asynchrone et fournir une puissance réactive au générateur asynchrone.

2. Système d'alimentation en énergie électrique selon la revendication 1, dans lequel le système d'alimentation en énergie électrique comprend des résistances de décharge (105) et des seconds commutateurs (106) pour connecter les résistances de décharge aux condensateurs.

3. Système d'alimentation en énergie électrique selon la revendication 2, dans lequel le système d'alimentation en énergie comprend un système de commande (107) pour actionner les premier et second interrupteurs de sorte que les seconds interrupteurs connectent les résistances de décharge aux condensateurs lorsque les premiers interrupteurs déconnectent les condensateurs des bornes électriques de l'enroulement statorique du générateur asynchrone.

4. Système d'alimentation en énergie électrique selon une quelconque des revendications 2 à 3, dans lequel les résistances de décharge (105) sont des résistances connectées en étoile ayant un point étoile mis à la terre.

5. Système d'alimentation en énergie électrique selon une quelconque des revendications 1 à 4, dans lequel un rotor du générateur asynchrone comprend un enroulement à cage d'écureuil.

6. Système d'alimentation en énergie électrique selon une quelconque des revendications 1 à 5, dans lequel l'enroulement statorique du générateur asynchrone est un enroulement triphasé.

7. Procédé de démarrage d'un générateur asynchrone d'un système d'alimentation en énergie électrique qui comprend en outre:
- un système convertisseur connecté aux bornes électriques de chaque enroulement statorique du générateur asynchrone et comprenant un circuit de tension continue (108) et un premier étage inverseur (109) pour transférer l'énergie électrique du générateur asynchrone au circuit de tension continue, et au moins un deuxième étage inverseur (110) pour convertir la tension continue du circuit de tension continue en une ou plusieurs tensions alternatives adaptées au système externe à alimenter par le système d'alimentation en énergie électrique,
**caractérisé en ce que** le procédé comprend de:
- connecter (201) des condensateurs aux bornes électriques dudit enroulement de chaque stator du générateur asynchrone entre le système convertisseur et le générateur asynchrone de manière à exciter le générateur asynchrone lors du démarrage, et ultérieurement
- déconnecter les condensateurs des bornes électriques de l'enroulement statorique du générateur asynchrone après que le générateur asynchrone excité par les condensateurs a alimenté le système de conversion pour qu'il soit prêt à fonctionner, et
- attendre (203) un temps prédéterminé après la déconnexion des condensateurs avant de
- activer (202) le système de convertisseur pour transférer la puissance électrique du générateur asynchrone et pour fournir une puissance réactive au générateur asynchrone.

8. Procédé selon la revendication 7, dans lequel le procédé comprend en outre la connexion de résistances de décharge aux condensateurs après que les condensateurs ont été déconnectés des bornes électriques de l'enroulement statorique du générateur asynchrone.

9. Procédé selon une quelconque des revendications 7 à 8, dans lequel les tensions des condensateurs sont des zéros au début du démarrage, et le fonctionnement du générateur asynchrone commence à l'aide d'une aimantation rémanente du générateur asynchrone.
